# EUROPEAN PATENT APPLICATION

(11) **EP 4 474 956 A1**
(43) Date of publication of application: **11.12.2024**
(21) Application number: 22924153.4
(22) Date of filing: 19.12.2022
(51) Int. Cl.: G06F 3/0338, A63F 13/24, G06F 3/01

(54) **OPERATION DEVICE**

(30) Priority: 31.01.2022 JP 2022013093; 19.10.2022 JP 2022167743
(71) Applicant: Sony Group Corporation, Tokyo 108-0075 (JP)
(72) Inventor: LIU, Yuhu, Tokyo 108-0075 (JP); NAKAGAWA, Yusuke, Tokyo 108-0075 (JP); YASUDA, Ryouhei, Tokyo 108-0075 (JP)
(74) Representative: D Young & Co LLP
(86) International application number: PCT/JP2022/046737
(87) International publication number: WO 2023/145304

(57) **Abstract**

To further improve a user's operational feeling when operating a stick that can be moved in both positive and negative directions.

An operation device includes: an operation unit that is moved by an operation of a user; a first movable unit that enables the operation unit to move within a predetermined range; a first drive unit; and a first driven unit that includes at least one component and is capable of moving an abutting portion of the first movable unit according to a driving force of the first drive unit.

## Description

### TECHNICAL FIELD

The present disclosure relates to an operation device.

### BACKGROUND ART

In recent years, a technology for presenting a force sensation corresponding to a user's operation of to the user has been developed. For example, Patent Document 1 discloses an operation device capable of switching ON and OFF of a force sensation with respect to a trigger that can be moved in either one of positive and negative directions in a one-dimensional direction.

### CITATION LIST

### PATENT DOCUMENT

Patent Document 1: WO 2018/020794 A

### SUMMARY OF THE INVENTION

### PROBLEMS TO BE SOLVED BY THE INVENTION

However, although the technology described in Patent Document 1 is applicable to a trigger operation in a one-dimensional direction, for example, the technology requires precise control in presenting a force sensation, and furthermore, it is difficult to expand the technology to a stick operation capable of moving in a two-dimensional direction, a three-dimensional direction, or both positive and negative directions.

Therefore, the present disclosure proposes a new and improved operation device capable of further improving the user's operational feeling when operating a stick that can be moved in both the positive and negative directions.

### SOLUTIONS TO PROBLEMS

According to the present disclosure, there is provided an operation device including: an operation unit that is moved by an operation of a user; a first movable unit that enables the operation unit to move within a predetermined range; a first drive unit; and a first driven unit that includes at least one component and is capable of moving an abutting portion of the first movable unit according to a driving force of the first drive unit.

### BRIEF DESCRIPTION OF DRAWINGS

Fig. 1 is an explanatory view for explaining an overall outline of an operation device according to the present disclosure.
Fig. 2 is an explanatory view for explaining a functional configuration example of the operation device according to the present disclosure.
Fig. 3 is an explanatory diagram for explaining a functional configuration example of a control apparatus according to the present disclosure.
Fig. 4 is an explanatory view for explaining an outline regarding force sensation presentation according to the present disclosure.
Fig. 5A is an explanatory view for explaining an example regarding driving of an actuator in a case where a force sensation presentation request is set to be present.
Fig. 5B is an explanatory view for explaining an example regarding driving of the actuator in a case where the force sensation presentation request is set to be absent.
Fig. 6 is an explanatory diagram for explaining an example regarding calculation of a force sensation vector.
Fig. 7 is an explanatory diagram for explaining an outline of a command object.
Fig. 8 is an explanatory diagram for explaining an example of a force sensation vector when a stick is tilted from "0" toward a region with another number.
Fig. 9 is an explanatory diagram for explaining an example of the force sensation vector when the stick is tilted from "1" toward a region with "2" or "8".
Fig. 10 is an explanatory diagram for explaining an example of an instantaneous force sensation presentation method.
Fig. 11A is an explanatory diagram for explaining a specific example of a command value generated in a case where a ball collides with a character a plurality of times.
Fig. 11B is an explanatory diagram for explaining a specific example of the command value generated in a case where the ball collides with the character a plurality of times.
Fig. 12 is an explanatory diagram for explaining an example of a continuous force sensation presentation method.
Fig. 13A is an explanatory diagram for explaining an example of movement restriction of the stick.
Fig. 13B is an explanatory diagram for explaining another example of the movement restriction of the stick.
Fig. 14 is a diagram illustrating an example of a graph illustrating a transition of a force sensation vector with time.
Fig. 15 is an explanatory diagram for explaining an example of a command value including amplitude information.
Fig. 16A is an explanatory diagram for explaining another example of the command value including amplitude information.
Fig. 16B is an explanatory diagram for explaining another example of the command value including amplitude information.
Fig. 17 is an explanatory diagram for explaining an example of operation processing of the control apparatus according to the present disclosure.
Fig. 18 is an abstract diagram obtained by abstracting a configuration regarding force sensation presentation of the operation device according to the present disclosure.
Fig. 19 is a graph illustrating a position change of each configuration in force sensation presentation of the operation device according to the present disclosure.
Fig. 20A is an abstract diagram obtained by abstracting a configuration regarding force sensation presentation of the operation device including a stopper including two components.
Fig. 20B is an abstract diagram obtained by abstracting the configuration regarding force sensation presentation of the operation device including the stopper including the two components.
Fig. 20C is an abstract diagram obtained by abstracting the configuration regarding force sensation presentation of the operation device including the stopper including the two components.
Fig. 20D is an abstract diagram obtained by abstracting the configuration regarding force sensation presentation of the operation device including the stopper including the two components.
Fig. 21 is a graph illustrating a position change of each configuration in force sensation presentation of the operation device including the stopper including the two components.
Fig. 22 is a graph illustrating a position change of each configuration in force sensation presentation of an operation device including a positive actuator that drives a positive stopper and a negative actuator that drives a negative stopper.
Fig. 23A is an abstract diagram for explaining a modification of the shape of each configuration regarding force sensation presentation.
Fig. 23B is an abstract diagram for explaining a modification of the shape of each configuration regarding force sensation presentation.

### MODE FOR CARRYING OUT THE INVENTION

Hereinafter, a preferred embodiment of the present disclosure will be described in detail with reference to the accompanying drawings. Note that, in the present specification and the drawings, components having substantially the same functional configuration are denoted by the same reference signs, and redundant explanations are omitted.

Furthermore, the "mode for carrying out the invention" is described according to the order of items described below.
1. Outline of operation device
1.1. Outline
1.2. Functional configuration example of operation device 1
1.3 Functional configuration example of control apparatus 100
2. Example
2.1. Outline regarding force sensation presentation
2.2. Calculation of force sensation vector
2.3. Generation of command value
3. Example of operation processing
4. Specific example of force sensation presentation method
5. Additional notes

### <<1. Outline of operation device>>

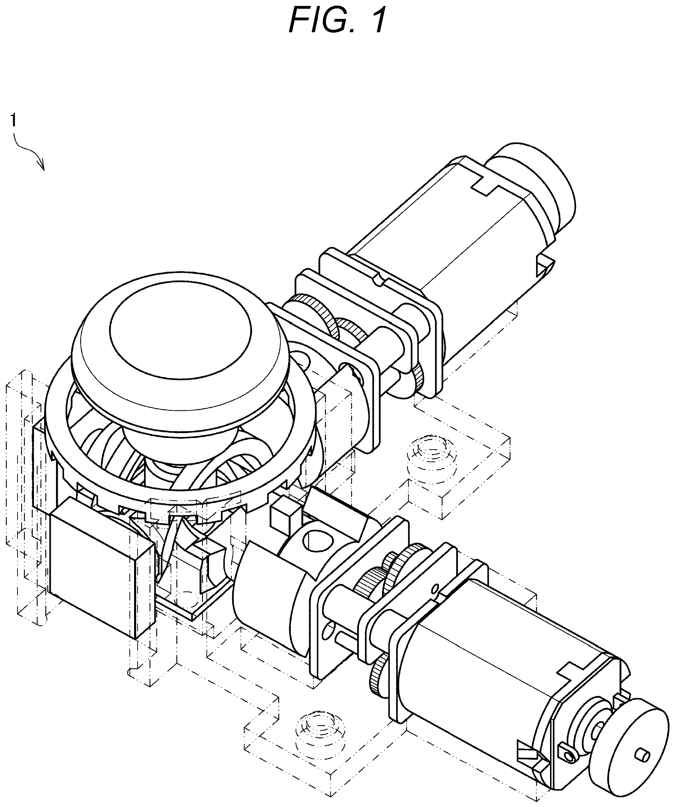

An embodiment of the present disclosure relates to an operation device capable of further improving an operational feeling of a user. First, an outline of the operation device according to the present disclosure will be described with reference to Fig. 1.

### <1.1. Outline>

Fig. 1 is an explanatory view for explaining an overall outline of an operation device 1 according to the present disclosure. Recently, there is a need to provide a comfortable operational feeling to a user while presenting a force sensation to an operation device such as an analog stick.

For example, in a controller used for a game, a force sensation corresponding to a state or action of a character is presented at the time of operating the character, whereby a realistic feeling or a sense of immersion can be provided to the user.

Furthermore, in a remote controller used for a television or a user interface (UI) in a game or in a vehicle, a force sensation corresponding to pressing of various switches is presented, whereby usability can be improved.

In addition, there is also a need for an operation device in which a force sensation is not always presented and a force sensation presentation request is set to be absent in a case where it is desired to concentrate on a motion, or the like. That is, there are cases in which it is desirable that the operation device be capable of switching between a state in which a force sensation is presented and a state in which no force sensation is presented (that is, it is possible to set the presence/absence of a force sensation presentation request).

Therefore, the operation device 1 according to the present disclosure can set the presence or absence of a force sensation presentation request, and can improve the user's operational feeling regardless of the presence or absence of a force sensation presentation request.

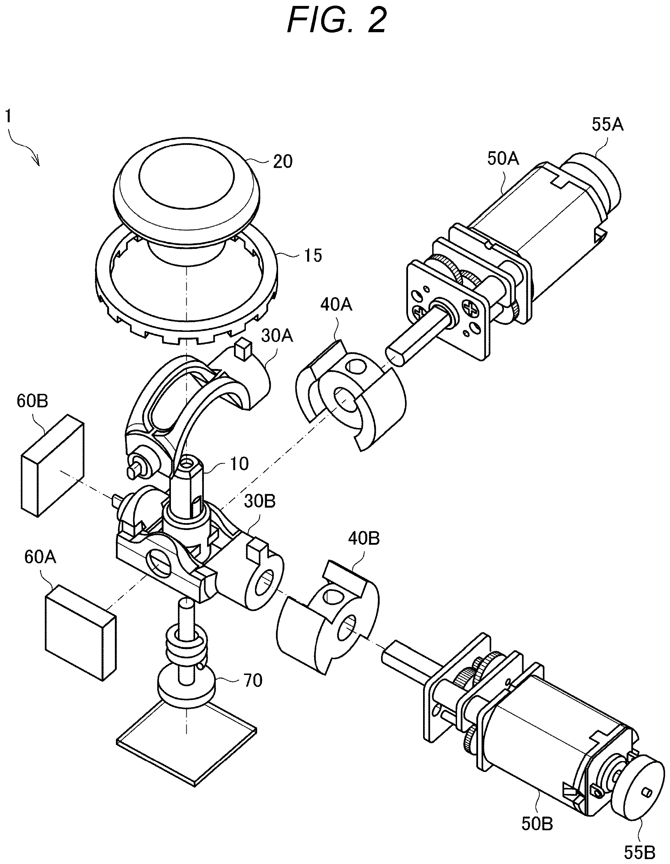

Note that the operation device 1 according to the present disclosure may be an entire housing (for example, a controller or the like) including the analog stick as illustrated in Fig. 1, or may be an analog stick portion as illustrated in Fig. 1. In the present specification, for convenience of description, the analog stick portion as illustrated in Fig. 1 will be described as the operation device 1. Hereinafter, a functional configuration example of the operation device 1 according to the present disclosure will be described with reference to Fig. 2.

### <1.2. Functional configuration example of operation device 1>

Fig. 2 is an explanatory view for explaining a functional configuration example of the operation device 1 according to the present disclosure. In the present specification, a case where the operation device 1 is applied to a stick operation in a two-dimensional direction will be mainly described; however, the operation device 1 according to the present disclosure is also applicable to a stick operation in a one-dimensional direction or a three-dimensional direction.

As illustrated in Fig. 2, the operation device 1 according to the present disclosure includes a stick 10, a limiting ring 15, a stick cap 20, rotating bodies 30, stoppers 40, actuators 50, angle sensors 55, angle sensors 60, and an origin return unit 70.

### (Stick 10)

The stick 10 according to the present disclosure is an example of an operation unit tilted by a user's operation. For example, the stick 10 can be tilted by the rotating body 30. More specifically, the stick 10 can be tilted by the rotating body 30 within a predetermined rotation range limited by the limiting ring 15.

For example, the stick 10 can be tilted by the user with the center axis of a rotating body 30A as the rotation axis. Furthermore, the stick 10 can be tilted by the user with the center axis of a rotating body 30B as the rotation axis.

### (Limiting ring 15)

The limiting ring 15 according to the present disclosure is a ring for rotating the rotating body 30 only within the predetermined range. For example, the limiting ring 15 is brought into contact with the stick 10 when the stick 10 is tilted by a certain value. As a result, the rotatable range of the rotating body 30 is also limited.

### (Stick cap 20)

The stick cap 20 according to the present disclosure is a cap that covers the stick 10. The user can tilt the stick 10 via the stick cap 20 by, for example, operation with fingers.

### (Rotating body 30)

The rotating body 30 according to the present disclosure rotates about the rotation axis of the rotating body 30, thereby making it possible to tilt the stick 10 within the predetermined rotation range.

For example, the rotating body 30A, which is an example of the first movable unit, enables the stick 10 to move within a predetermined range. More specifically, the rotating body 30A rotates with the center axis of the rotating body 30A as the first axis, which enables the stick 10 to be tilted in both positive and negative directions in the rotation direction of the rotating body 30A.

Furthermore, the rotating body 30B, which is an example of the second movable unit, rotates with the center axis of the rotating body 30B as the second axis, which enables the stick 10 to be tilted in both positive and negative directions in the rotation direction of the rotating body 30B. Note that, for example, the center axis of the rotating body 30A and the center axis of the rotating body 30B may be orthogonal to each other as illustrated in Fig. 2, for example.

Furthermore, for example, the rotating body 30A may have an elongated hole that does not interfere with the stick 10 when the stick 10 is tilted with respect to the center axis of the rotating body 30B.

Furthermore, the rotating body 30 according to the present disclosure has an abutting portion that comes into contact with the stopper 40 described later by movement of the stopper 40. For example, the abutting portion may have a protruding structure as illustrated in Fig. 2, but details thereof will be described later.

Note that in the present specification, an example in which there are two rotating bodies 30 such as the rotating body 30A and the rotating body 30B as illustrated in Fig. 2 will be mainly described, but the number of rotating bodies 30 may be one.

Furthermore, in a case where the number of rotating bodies 30 is one, the number of each of the stoppers 40, the actuators 50, the angle sensors 55, and the angle sensors 60 to be described later may also be one.

### (Stopper 40)

The stopper 40 according to the present disclosure is an example of a driven unit. The stopper 40 can move the abutting portion of the rotating body 30 according to the driving force of the actuator 50. Furthermore, the stopper 40 can apply a load in the rotation direction of the rotating body 30 by coming into contact with the abutting portion of the rotating body 30. As a result, the stick 10 is moved, and a force sensation is presented to the user via the stick 10.

Furthermore, the stopper 40 includes at least one component. The stopper 40 illustrated in Fig. 2 includes one component. A specific example of the stopper 40 including two components will be described later.

For example, the stopper 40A is an example of a first driven unit, and can move the abutting portion in the rotation direction of the rotating body 30A. A load is applied in the rotation direction of the rotating body 30A by movement of the abutting portion, and the operation device 1 can present a force sensation corresponding to the rotation direction of the rotating body 30A to the user.

Furthermore, the stopper 40B is an example of a second driven unit, and can move the abutting portion in the rotation direction of the rotating body 30B. A load is applied in the rotation direction of the rotating body 30B by movement of the abutting portion, and the operation device 1 can present a force sensation corresponding to the rotation direction of the rotating body 30B to the user.

### (Actuator 50)

The actuator 50 according to the present disclosure is an example of a drive unit that performs driving according to control of the control apparatus 100 described later. For example, the actuator 50A is an example of a first drive unit, and can rotate the stopper 40A according to the driving force based on the command value acquired from the control apparatus 100.

Furthermore, the actuator 50B is an example of a second drive unit, and can rotate the stopper 40B according to the driving force based on the command value acquired from the control apparatus 100.

Note that the actuator 50 according to the present disclosure may be, for example, a DC rotary motor, but is not limited to such an example. For example, the actuator 50 may be a brushless motor, a linear motor, a solenoid, or any actuator capable of restriction from the left and right with a stopper structure.

### (Angle sensors 55, 60)

The angle sensors 55 and 60 according to the present disclosure are sensors capable of detecting angle information. For example, the angle sensor 55 detects angle information of the stopper 40. Furthermore, the angle sensor 60 detects angle information of the stick 10.

### (Origin return unit 70)

The origin return unit 70 according to the present disclosure is configured to return the stick 10 to the origin. For example, the origin return unit 70 includes a spring for origin return, an insert, and a slider.

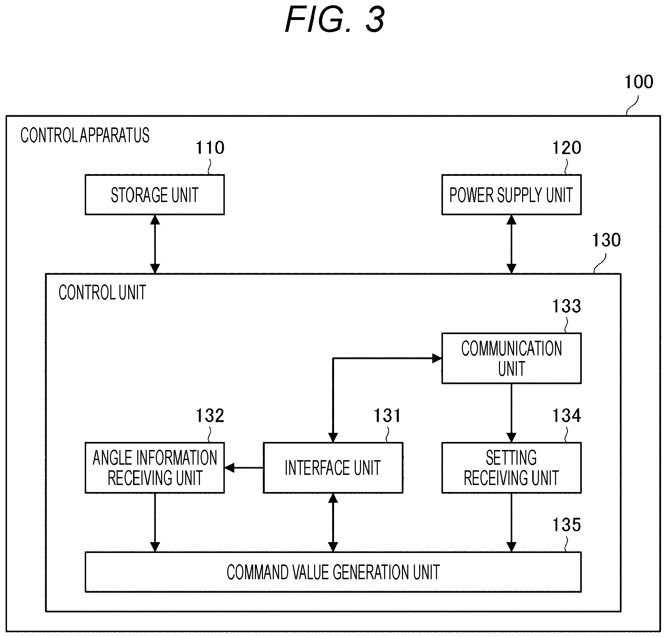

The functional configuration example of the operation device 1 according to the present disclosure has been described above. Next, a functional configuration example of the control apparatus 100 according to the present disclosure will be described with reference to Fig. 3.

### <1.3. Functional configuration example of control apparatus 100>

Fig. 3 is an explanatory diagram for explaining a functional configuration example of the control apparatus 100 according to the present disclosure. As illustrated in Fig. 3, the control apparatus 100 according to the present disclosure includes a storage unit 110, a power supply unit 120, and a control unit 130.

In the present specification, it is assumed that the control apparatus 100 according to the present disclosure is included in the housing (for example, the controller) including the operation device 1, but the control apparatus 100 may be disposed at an arbitrary place as a server.

### (Storage unit 110)

The storage unit 110 according to the present disclosure holds software and various data. For example, the storage unit 110 holds the relationship between the command value generated by a command value generation unit 135 and the applied voltage to the actuator 50. Furthermore, the storage unit 110 may hold the relationship between the applied voltage and the torque generated by the applied voltage. Note that the torque is an example of the driving force.

Furthermore, the operation device 1 may be equipped with a sensor that detects the torque generated by contact between the rotating body 30 and the stopper 40. Then, the sensor may detect the torque generated by the applied voltage. In this case, the storage unit 110 may hold the relationship between the applied voltage and the torque detected by the sensor. As a result, an interface unit 131 can control the torque in a feedback manner on the basis of the relationship held by the storage unit 110, and can perform control according to various conditions such as the age and gender of the user, for example.

### (Power supply unit 120)

The power supply unit 120 according to the present disclosure supplies power to each configuration in the control apparatus 100. Although Fig. 3 illustrates an example in which the power supply unit 120 is mounted inside the control apparatus 100, the power supply unit 120 may be located outside the control apparatus 100.

### (Control unit 130)

The control unit 130 according to the present disclosure controls the overall operation of the control apparatus 100. As illustrated in Fig. 3, the control unit 130 according to the present disclosure includes, for example, the interface unit 131, an angle information receiving unit 132, a communication unit 133, a setting receiving unit 134, and the command value generation unit 135.

The interface unit 131 according to the present disclosure is a communication interface that transmits and receives signals including various types of information to and from the operation device 1.

For example, the interface unit 131 receives angle information from the angle sensors 55 and 60. Furthermore, the interface unit 131 supplies a current corresponding to the command value generated by the command value generation unit 135 to the actuator 50.

The angle information receiving unit 132 according to the present disclosure receives the angle information received by the interface unit 131. For example, the angle information receiving unit 132 receives the angle information of the stick 10 and the angle information of the stopper 40 received by the interface unit 131.

The communication unit 133 according to the present disclosure performs various communications with another apparatus. For example, the communication unit 133 receives various signals from a server or a mobile terminal used by a user.

For example, the communication unit 133 receives information regarding the presence or absence of a force sensation presentation request set on an application by the user from the server or the mobile terminal.

Furthermore, the communication unit 133 receives information regarding various targets on the application from the server or the mobile terminal. Specific examples of the information regarding various targets will be described later.

The setting receiving unit 134 according to the present disclosure receives setting information received by the communication unit 133. For example, the setting receiving unit 134 accepts information regarding the presence or absence of a force sensation presentation request set by the user.

The command value generation unit 135 according to the present disclosure generates a command value for driving the actuator 50 on the basis of the angle information received by the angle information receiving unit 132 and the setting information received by the setting receiving unit 134.

For example, in a case where a force sensation presentation request is set to be present, the command value generation unit 135 calculates a force sensation vector that is an example of a force sensation value. Furthermore, the command value generation unit 135 may generate a command value on the basis of the calculated force sensation vector. Details regarding calculation of the force sensation vector and generation of the command value will be described later.

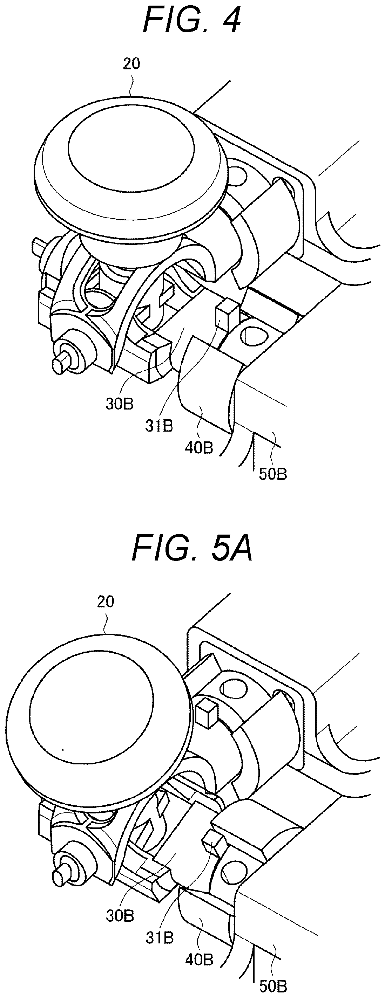

The functional configuration examples of the operation device 1 and the control apparatus 100 according to the present disclosure have been described above. Next, details of the example according to the present disclosure will be sequentially described with reference to Figs. 4 to 14B.

### «2. Example»

### <2.1. Outline regarding force sensation presentation>

Fig. 4 is an explanatory view for explaining an outline regarding force sensation presentation according to the present disclosure. The rotating body 30 has a protruding structure 31 as illustrated in Fig. 4 as an abutting portion.

Note that, in the following description, an outline in a case where the stick 10 is tilted with respect to the rotation axis of the rotating body 30B will be described, but similar operation is performed in a case where the stick 10 is tilted with respect to the rotation axis of the rotating body 30A, and thus the description thereof will be omitted.

Furthermore, the material of the protruding structure 31 may be arbitrary, but for example, by using a material such as a cushioning material capable of absorbing impact, unintended collision feeling can be reduced when a force sensation is presented to the user.

Furthermore, each of the position of the stick cap 20 illustrated in Fig. 4 and the position of the stick 10 covered with the stick cap 20 after being returned by the origin return unit 70 will be described as an origin position.

The user sets the presence or absence of a force sensation presentation request on the application, for example. Then, the actuator 50B rotates the stopper 40B on the basis of the force sensation presentation request. First, an example regarding driving of the actuator 50 in a case where a force sensation present request is set to be present will be described with reference to Fig. 5A.

Fig. 5A is an explanatory view for explaining an example regarding driving of the actuator 50B in a case where a force sensation presentation request is set to be present. In a case where a force sensation presentation request is set to be present, the actuator 50 rotates the stopper 40B under control of the control apparatus 100.

For example, the actuator 50B rotates the stopper 40B according to the driving force based on the command value generated by the control apparatus 100. Then, the actuator 50B can apply a load to the rotating body 30B by contact between an end surface of the notch of the stopper 40B and the protruding structure 31B of the rotating body 30B. Thus, the actuator 50B can move the rotating body 30B.

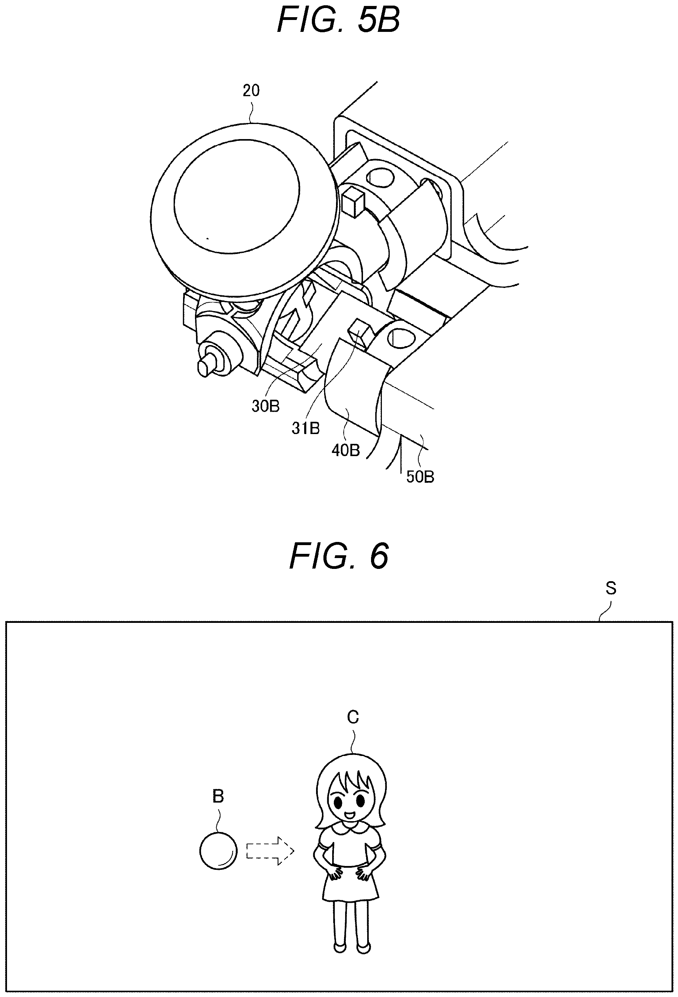

Moreover, the stick 10 is also tilted in the direction in which the rotating body 30B is moved. As a result, the operation device 1 according to the present disclosure can present the user with a force sensation corresponding to the driving force of the actuator 50B in the direction in which the stick 10 is tilted. Next, an example regarding driving of the actuator 50B in a case where a force sensation presentation request is set to be absent will be described with reference to Fig. 6B.

Fig. 5B is an explanatory view for explaining an example regarding driving of the actuator 50B in a case where a force sensation presentation request is set to be absent. In a case where a force sensation presentation request is set to be absent, the actuator 50 rotates the stopper 40B under control of the control apparatus 100.

For example, the actuator 50B may move the stopper 40B to a position at which the protruding structure 31B of the rotating body 30B and the end surface of the notch of the stopper 40 do not come into contact with each other when the stick 10 is tilted as illustrated in Fig. 4. There are cases where the position where the protruding structure 31B of the rotating body 30B and the end surface of the notch of the stopper 40 do not come into contact with each other as described above is expressed as a non-interference position.

As a result, for example, even in a case where the user tilts the stick 10 as illustrated in Fig. 5B, the protruding structure 31B of the rotating body 30B and the stopper 40B do not come into contact with each other. That is, since a sensation of resistance according to the contact is not provided to the user, the operability of the user can be further improved even in a case where a force sensation presentation request is set to be absent.

The outline regarding force sensation presentation according to the present disclosure has been described above. As described above, the actuator 50 can provide the user with a force sensation by the driving force based on the command value generated by the control apparatus 100. Subsequently, a specific example of processing in which a command value is generated by the control apparatus 100 will be sequentially described.

### <2.2. Calculation of force sensation vector>

Fig. 6 is an explanatory diagram for explaining an example regarding calculation of a force sensation vector. In the example illustrated in Fig. 6, a character C and a ball B exist in a virtual space S such as a game. Then, the user can operate the character C by using the operation device 1.

Furthermore, in the example illustrated in Fig. 6, a state in which the ball B is flying toward the stopped character C is illustrated.

Note that the character C is an example of an operation object operated by the user, and the ball B is an example of an interference object that interferes with the operation object (that is, the character C).

In a case where a force sensation presentation request is set to be present, the command value generation unit 135 calculates a force sensation vector on the basis of information regarding various targets on the application received by the communication unit 133.

For example, the information regarding various targets on the application may include the characteristics of the character C or may include the characteristics of the ball B.

Furthermore, the characteristics here include, for example, properties such as speed, size, elasticity, friction, electricity, and surface roughness, or a scalar field, a vector field, or the like designed in advance. For example, the characteristics of the ball B may include various properties such as a flying speed, elasticity, or weight of the ball B.

For example, in the example illustrated in Fig. 6, in a case where the ball B collides with the character C from the left, the command value generation unit 135 calculates the force sensation vector in the right direction. Moreover, the command value generation unit 135 calculates the magnitude of the force sensation vector on the basis of various types of information such as the magnitude of the speed of the ball B and the hardness (that is, the elastic modulus) of the ball B.

More specifically, the command value generation unit 135 may calculate the magnitude of the force sensation vector to be greater in a case where the speed of the ball B is higher than that in a case where the speed is lower. As a result, it is possible to more accurately present the speed and hardness of the ball to the user as a force sensation.

Furthermore, the information regarding the targets on the application may include a relative positional relationship between the operation object and the interference object. For example, in the example illustrated in Fig. 6, information regarding various positional relationships such as the position of the ball B with respect to the position of the character C may be included.

Furthermore, the command value generation unit 135 may calculate a force sensation vector on the basis of information regarding a state change of the operation device 1.

For example, the information regarding the state change of the operation device 1 may include information regarding the angle at which the stick 10 is tilted.

For example, in the example illustrated in Fig. 6, a state in which the character C is stopped is illustrated, but the character C can move by the user's operation of tilting the stick 10.

In such a case, the command value generation unit 135 may calculate the force sensation vector with the angle at which the stick 10 is tilted as a starting point. As a result, the command value generation unit 135 can calculate the force sensation vector even in a case where the ball B collides with the moving character C.

Furthermore, the command value generation unit 135 may calculate the force sensation vector on the basis of the elapsed time from the time when presentation of a force sensation is started by the operation device 1.

For example, in a case where the ball B collides with the character C, the command value generation unit 135 may calculate a force sensation vector corresponding to the collision timing (for example, 0.1 seconds).

An example regarding calculation of the force sensation vector in a case where the operation object is the character C and the interference object is the ball B has been described above, but the operation object and the interference object according to the present disclosure are not limited to those in the example.

For example, the interference object may be a field in which the character C moves. For example, in a case where the character C is walking in a swamp, the command value generation unit 135 may calculate a force sensation vector based on a scalar field designed in advance for a field "swamp".

More specifically, for example, when the character C moves in a swamp, the command value generation unit 135 may continuously calculate, as the magnitude of the force sensation vector, a place where resistance is strong and a place where resistance is weak that are pre-designed. As a result, the operation device 1 can present, to the user, difficulty in movement peculiar to the swamp as a force sensation.

Furthermore, when the character C is moving in the swamp, the command value generation unit 135 may calculate a force sensation vector toward the origin from the angle at which the stick 10 is tilted. As a result, the user can more accurately feel difficulty in movement and a sensation of resistance in the swamp.

Furthermore, the field "swamp" has been described as an example representing difficulty in movement, but for example, the command value generation unit 135 may reflect various states such as a slope, stairs, a state in which the character C carries baggage, an action of swimming, or a stamina of the character C on the force sensation vector.

As another example of the interference object, for example, the command value generation unit 135 may calculate a sensation of resistance at the time of operating a tool used by the character C as a force sensation vector. More specifically, the command value generation unit 135 can thereby provide the user with a sensation of resistance when, for example, the character C performs an action of using a tool (for example, an action of drawing a bow, or the like).

Furthermore, for example, in a case where the interference object is a "wall", the command value generation unit 135 may calculate a force sensation vector in the normal direction of the wall when the character C collides with the wall. Furthermore, the command value generation unit 135 may calculate the magnitude of the force sensation vector on the basis of the traveling direction of the character C or the normal line of the wall. Furthermore, for example, the command value generation unit 135 may calculate a force sensation vector immediately after the character C collides with the wall (for example, about 0.5 seconds from the collision timing) to be great, and then calculate a force sensation vector to be small.

Furthermore, the interference object may be an object related to operation of the character C. An example regarding a ring-shaped command object will be described as an example of an object related to operation of the character C.

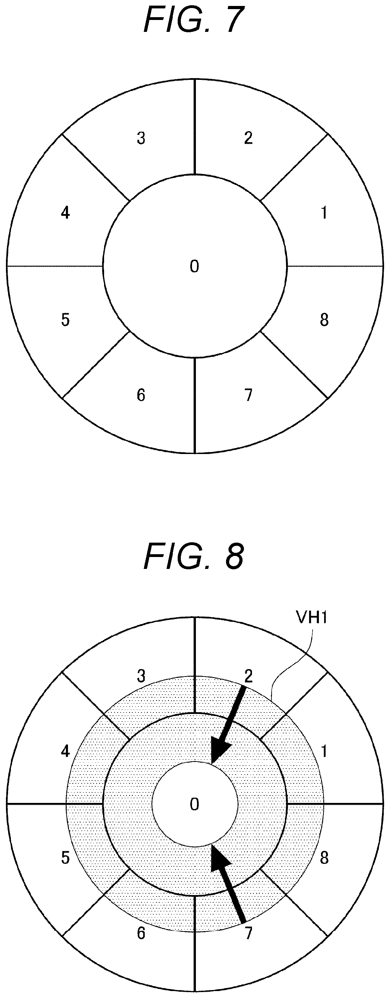

Fig. 7 is an explanatory diagram for explaining an outline of the command object. The command object according to the present disclosure may be, for example, a ring-shaped object having options as illustrated in Fig. 7.

More specifically, the command object may be, for example, an object having a feature in which regions each including an option (regions including "1" to "8" illustrated in Fig. 7) form a ring shape around a circle serving as a reference (circle including "0" illustrated in Fig. 7).

For example, the user may be able to display the command object on the application by performing a predetermined operation using the operation device 1, or may display the command object on the application according to an action such as a voice uttered by the user.

Furthermore, an option is included in each of the regions including "1" to "8". For example, by tilting the stick 10 from the origin position in any of the directions of the regions including the options of "1" to "8", the user can select the option in the tilted direction.

Fig. 8 is an explanatory diagram for explaining an example of a force sensation vector when the stick 10 is tilted from "0" toward a region with another number. For example, in a case where the user wishes to select an option in a region with a certain number, the user tilts the stick 10 from the origin position toward the region with the number.

In this case, for example, in a hatched region VH1 illustrated in Fig. 8, the command value generation unit 135 may calculate the force sensation vector in the direction of hindering movement from "0". As illustrated in Fig. 8, the hatched region VH1 may be a region including a defined range from the boundary of transition from "0" to another number.

For example, in a case where the user tilts the stick 10 from "0" toward the range of "2", the command value generation unit 135 may calculate the force sensation vector in the arrow direction in the hatched region VH1 illustrated in Fig. 8. At this time, the command value generation unit 135 may calculate the magnitude of the force sensation vector to be greater as the stick 10 is tilted from "0" to the region of "2" in the hatched region VH1.

Then, when the stick 10 goes beyond the hatched region VH1, the option in the region of "2" may be selected. Alternatively, after the stick 10 has moved to the region of "2" beyond the hatched region VH1, the option in the region of "2" may be selected when operation regarding confirmation of the option is further performed.

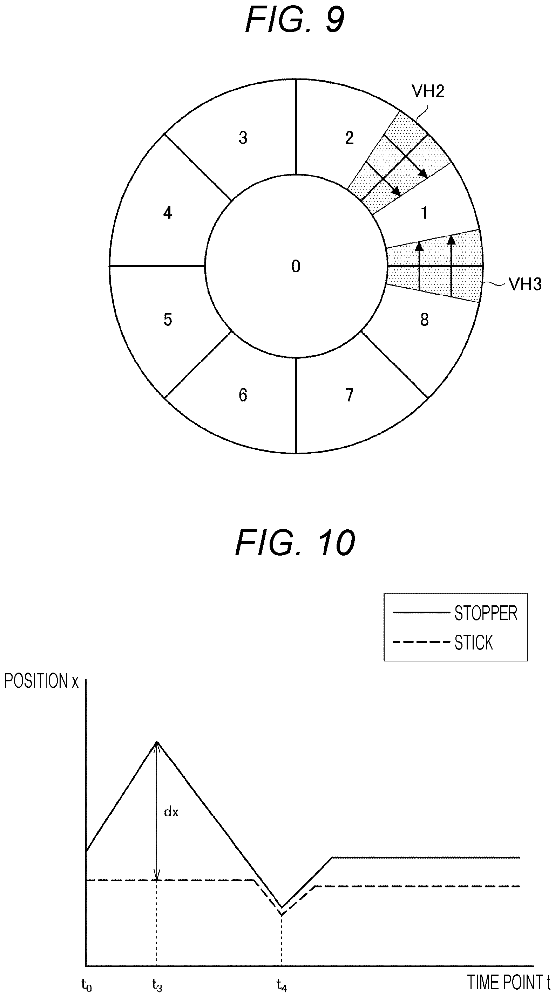

Fig. 9 is an explanatory diagram for explaining an example of the force sensation vector when the stick 10 is tilted from "1" toward the region with "2" or "8". For example, there are cases where after tilting the stick 10 to select the option in the region of "1", the user further selects an option adjacent to the region of "1".

Alternatively, a case is assumed in which the stick 10 is tilted to the region of "1" but the user wanted to select the option in the adjacent region of "2" or "8".

In these cases, the user tilts the stick 10 further from the region of "1" to the region of "2" or "8".

In this case, for example, the command value generation unit 135 may calculate the force sensation vector in the direction of hindering movement from "1" in a hatched region VH2 illustrated in Fig. 9.

More specifically, for example, in a case where the user tilts the stick 10 from the region of "1" toward the region of "2", the command value generation unit 135 may calculate the force sensation vector in the arrow direction in the hatched region VH2 illustrated in Fig. 9.

Alternatively, in a case where the user tilts the stick 10 from the region of "1" toward the region of "8", the command value generation unit 135 may calculate the force sensation vector in the arrow direction in a hatched region VH3 illustrated in Fig. 9.

Then, the option in the region of "2" may be selected when the stick 10 goes beyond the hatched region VH2, and the option in the region of "8" may be selected when the stick 10 goes beyond the hatched region VH3.

Alternatively, after the stick 10 has moved to the region of "2" or "8" beyond the hatched region VH2 or the hatched region VH3, the option in the region of "2" or "8" may be selected when operation regarding confirmation of the option is further performed.

Then, every time a region including an option is moved, the command value generation unit 135 may calculate a force sensation vector corresponding to the region. As a result, when movement to a region of another option is being made, the command value generation unit 135 can provide the user with the feeling of having passed over a region or the feeling of having fallen within a region reached after passing over the region.

Note that, although the example in which the ring (that is, regions of "1" to "8") surrounding the periphery of the command object is single has been described, the ring surrounding the periphery of the command object may be double or more.

Specific examples regarding calculation of the force sensation vector have been described above. The command value generation unit 135 according to the present disclosure may calculate a command value for controlling the actuator 50 on the basis of the calculated force sensation vector. Subsequently, specific examples regarding calculation of the command value according to the present disclosure will be sequentially described with reference to Figs. 10 to 16B.

### <2.3. Generation of command value>

Examples of the method of presenting a force sensation to the user include two types of methods, that is, an instantaneous presentation method and a continuous presentation method. Hereinafter, a command value regarding the instantaneous presentation method and a command value regarding the continuous presentation method will be described.

### (Instantaneous presentation method)

First, a specific example of the instantaneous presentation method will be described. For example, a case where the ball B collides with the character C illustrated in Fig. 6 is assumed for the instantaneous presentation method.

For example, a force sensation may be instantaneously presented by impulsive force generated by the stopper 40 colliding with the protruding structure 31 by the driving force of the actuator 50 from a state in which the stopper 40 and the protruding structure 31 of the rotating body 30 are not in contact with each other. Here, an example of the instantaneous force sensation presentation method will be described with reference to Fig. 10.

Fig. 10 is an explanatory diagram for explaining an example of the instantaneous force sensation presentation method. In the graph illustrated in Fig. 10, the position of the stopper 40 is indicated by a solid line, and the position of the stick 10 is indicated by a broken line. Note that the position of the stick 10 here more specifically indicates the position of the protruding structure 31 of the rotating body 30. Since the stick 10 moves in conjunction with the protruding structure 31, a description will be given assuming that the position of the protruding structure 31 is the position of the stick 10 for convenience of description. Furthermore, the position of the stick 10 and the position of the stopper 40 indicate the positions around the axis of the rotating body 30.

First, if the position of the stopper 40 and the position of the stick 10 are separated from each other by a certain distance or more, impulsive force generated by the stopper 40 colliding with the protruding structure 31 increases. In contrast, in a case where the position of the stopper 40 and the position of the stick 10 are close to each other (that is, in a case where the distance therebetween is less than the certain distance), impulsive force generated by the stopper 40 colliding with the protruding structure 31 can be reduced.

Therefore, the actuator 50 according to the present disclosure may present an instantaneous force sensation by using the relationship between the distance between the stopper 40 and the stick 10 and the impulsive force generated by the collision.

For example, in a case where an impact mode is set and the command value regarding collision is obtained in the application, the actuator 50 may separate the position of the end surface of the notch of the stopper 40 from the protruding structure 31 of the rotating body 30 by a predetermined offset distance dx. However, in a case where the end surface of the notch of the stopper 40 and the protruding structure 31 are separated from each other by the predetermined offset distance dx or more, the actuator 50 may not perform control of separating the position of the end surface of the notch of the stopper 40 from the protruding structure 31. Note that the impact mode is an example of an instantaneous force sensation presentation mode.

Then, the actuator 50 may cause the end surface of the notch of the stopper 40 to collide with the protruding structure 31 of the rotating body 30, and then may return the position of the stopper 40 to the position before the collision (for example, the origin position of the stopper 40). As a result, a more impactful force sensation can be presented to the user.

Note that the command value can include information regarding a change amount (that is, the inclination of the solid line from a time point t₃ to a time point t₄ illustrated in Fig. 10) of the position of the stopper 40 with respect to the time from the time point t₃ when the position of the stopper 40 is separated by the offset distance dx to the time point t₄ when impulsive force is applied to the stick 10. When the terminal on the application side transmits the command value to the control apparatus 100, the actuator 50 may cause the end surface of the notch of the stopper 40 to collide with the protruding structure 31 of the rotating body 30 with an impulsive force corresponding to the command value, under the control of the control apparatus 100.

An example of the instantaneous force sensation presentation method has been described. Here, an example in which an instantaneous force sensation is presented by the stopper 40 colliding with the protruding structure 31 after being separated by the offset distance dx has been described, but the method of presenting an instantaneous force sensation according to the present disclosure is not limited to such an example.

For example, a force sensation may be instantaneously presented by the impulsive force generated by the protruding structure 31 of the rotating body 30 colliding with the stopper 40 when the user tilts the stick 10 in a state where the stopper 40 is stationary.

Furthermore, a force sensation may be instantaneously presented to the user by causing the stopper 40 to collide with the protruding structure 31 of the rotating body 30 and then moving the stopper 40 to a position not in contact with the protruding structure 31. As a result, the feeling of colliding with the interference object can be presented to the user more clearly.

For example, the direction of a force sensation vector is not only the vertical direction corresponding to one of the rotating body 30A and the rotating body 30B or the horizontal direction corresponding to the other, but also an oblique direction including both a vertical component and a horizontal component in some cases. In a case where such an oblique direction is expressed as one collision, it is necessary that the stopper 40A collides with the rotating body 30A and the stopper 40B collides with the rotating body 30B at the same timing.

In contrast, in a case where there is a difference between the timing at which the stopper 40A collides with the rotating body 30A and the timing at which the stopper 40B collides with the rotating body 30B, there is a possibility that a force sensation is presented to the user twice.

Therefore, the command value generation unit 135 may generate a command value that causes the stopper 40A and the stopper 40B to collide with the rotating body 30A and the rotating body 30B, respectively, within an error range that does not allow the user to perceive a difference in collision timing.

Alternatively, the command value generation unit 135 may control the timings at which the interface unit 131 transmits the command value to the actuator 50A and the actuator 50B, respectively.

Furthermore, when a force sensation vector is decomposed into a vertical component and a horizontal component and the ratio of one of the components is greater, the command value generation unit 135 may generate a command value for driving only one of the actuator 50A or the actuator 50B corresponding to the component having the greater ratio.

Furthermore, also as a notification means for notifying that a UI cursor has moved one space or moved to the end, the command value generation unit 135 may generate a command value for instantaneously presenting a force sensation to the user.

Furthermore, upon collision of the interference object as illustrated in Fig. 6, the user obtains different bodily sensation between a single collision and a plurality of collisions in some cases. Therefore, the command value generation unit 135 may change the magnitude of the force sensation to be presented to the user according to the number of times that a force sensation caused by a collision is presented.

For example, in a case where the ball B collides with the character C once as illustrated in Fig. 6, the command value generation unit 135 may generate feedback stronger than the calculated force sensation vector as a command value in order to present a sense of direction more clearly to the user.

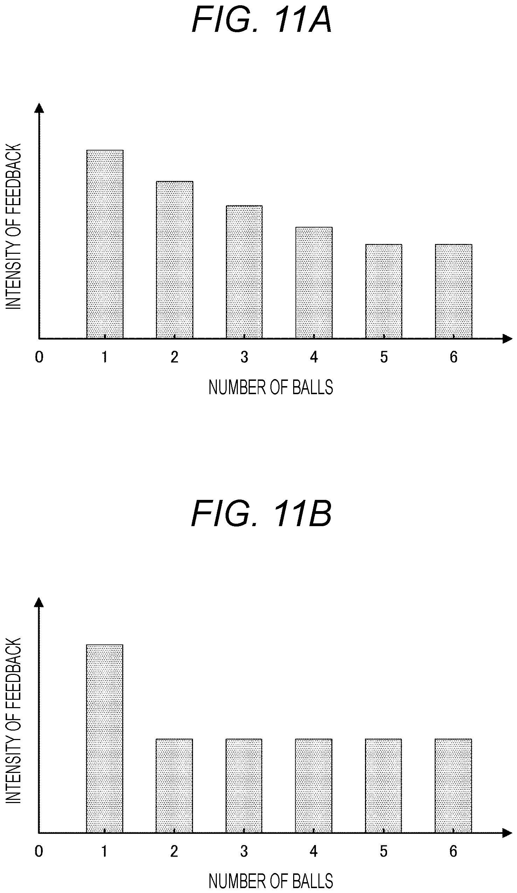

Each of Figs. 11A and 11B is an explanatory diagram for explaining a specific example of the command value generated in a case where the ball B collides with the character C a plurality of times. For example, the user more easily feels a sense of direction in the case of a plurality of collisions than in the case of one collision in some cases.

Therefore, as illustrated in Fig. 11A, the command value generation unit 135 may generate a command value such that the feedback of a first collision is the strongest and the intensity of the feedback at the second and subsequent times is gradually reduced.

Alternatively, as illustrated in Fig. 11B, the command value generation unit 135 may generate a command value such that the feedback of a first collision is the strongest and the intensity of the feedback at the second and subsequent times is uniformly reduced.

As a result, the user can more easily recognize the sense of direction of collision with the ball B in either a single collision or a plurality of collisions.

Note that the command value generation unit 135 may generate a command value such that the intensity of the second and subsequent feedback is changed as described above according to the number of balls B colliding per unit time.

The specific examples of the instantaneous presentation method have been described above as the methods of presenting a force sensation to the user. Note that vibration presentation can be performed by repeating instantaneous presentation of a force sensation caused by collision between the stopper 40 and the rotating body 30. A specific example regarding vibration presentation will be described later. Next, as a method of presenting a force sensation to the user, a specific example of the continuous presentation method will be described.

### (Continuous presentation method)

For example, as the continuous presentation method, a case where the character moves in a swamp, a case where the character draws a bow, a case where an operation by a command object is performed, described above, and the like are assumed.

Upon continuous force sensation presentation, first, the command value generation unit 135 may drive the actuator 50 to a position where the protruding structure 31 of the rotating body 30 and the stopper 40 come into contact with each other.

Then, the command value generation unit 135 may change the driving force of the actuator 50 according to the tilt of the operation object or the tilt of the stick 10.

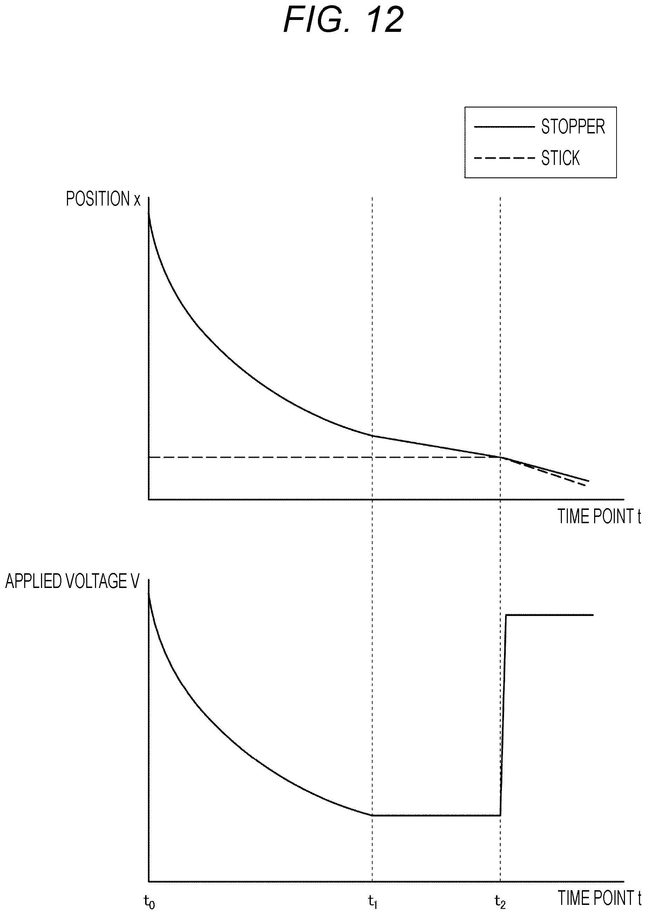

Note that the command value generation unit 135 may switch to continuous presentation after presenting the instantaneous force sensation described above. Here, an example of the continuous force sensation presentation method will be described with reference to Fig. 12.

Fig. 12 is an explanatory diagram for explaining an example of the continuous force sensation presentation method. For example, in a case where a soft collision mode is set and a command value regarding collision is obtained in the application, the actuator 50 may perform control according to the distance between the stopper 40 and the stick 10. Note that the soft collision mode is an example of the continuous force sensation presentation mode.

For example, in a case where the soft collision mode is set, the actuator 50 may rotate the rotating body 30 at a first speed in a case where the distance between the end surface of the notch of the stopper 40 and the protruding structure 31 of the rotating body 30 is equal to or longer than a first distance.

Here, the first distance is, for example, the distance between the stopper 40 (more specifically, the end surface of the notch of the stopper 40) and the stick 10 (more specifically, the protruding structure 31 of the rotating body 30) at a time point t₁ illustrated in Fig. 12. Furthermore, the first speed is the speed of the stopper 40 in the time from a time point t₀ to the time point t₁ illustrated in Fig. 12, and for example, the actuator 50 may rotate the rotating body 30 at the first speed by PD control.

According to PD control, there are cases where the stopper 40 and the stick 10 keep a certain distance and do not collide with each other. Therefore, in a case where the distance between the end surface of the notch of the stopper 40 and the protruding structure 31 of the rotating body 30 is less than the first distance, the actuator 50 may rotate the rotating body 30 at a second speed different from the first speed described above.

Here, the second speed is the speed of the stopper 40 in the time from the time point t₁ to a time point t₂ illustrated in Fig. 12, and may be a constant speed controlled to such an extent that the user does not perceive the collision of the stopper 40. However, the first speed and the second speed are not limited to the examples described above. For example, each of the first speed and the second speed may be constant or may be a speed defined by a function such as an exponential function.

According to the control method described above, as illustrated in Fig. 12, a higher voltage is applied to the actuator 50 as the distance increases. Then, when the distance between the end surface of the notch of the stopper 40 and the protruding structure 31 of the rotating body 30 becomes the first distance, a constant voltage is applied to the actuator 50. Moreover, after the end surface of the notch of the stopper 40 collides with the protruding structure 31 of the rotating body 30, a high voltage is applied again to the actuator 50 so that a continuous force sensation is presented to the user.

According to such control according to the distance between the stopper 40 and the stick 10, the stopper 40 quickly rotates in a state of being separated from the stick 10, and more slowly rotates as approaching the stick 10, so that the stopper 40 can collide with the stick 10 with a weak force that cannot be perceived by the user.

Note that, after the end surface of the notch of the stopper 40 collides with the protruding structure 31 of the rotating body 30, a continuous force sensation is presented to the user by a command value from the application, but such a command value regarding a force sensation to be presented to the user may be continuously transmitted from the application.

Furthermore, in a case where positive and negative of the force to be presented to the user is reversed, the actuator 50 according to the present disclosure may present a continuous force sensation to the user by bringing the stopper 40 close to the stick 10 again and causing the stopper 40 to collide with the stick 10 in the above-described procedure.

Furthermore, different control criteria may be used for the actuator 50A and the actuator 50B. For example, the first distance, the first speed, and the second speed described above may be used as the control criteria for the actuator 50A, and a second distance, a third speed, and a fourth speed different from those of the actuator 50A may be used as the control criteria for the actuator 50B. However, the same control criteria may be used for the actuator 50A and the actuator 50B. In other words, the first distance and the second distance may indicate the same value, the first speed and the third speed may indicate the same value, and the second speed and the fourth speed may indicate the same value.

Furthermore, as an example of the continuous presentation method, the command value generation unit 135 may generate a command value regarding movement restriction of the stick 10 when the movement restriction of the stick 10 is requested.

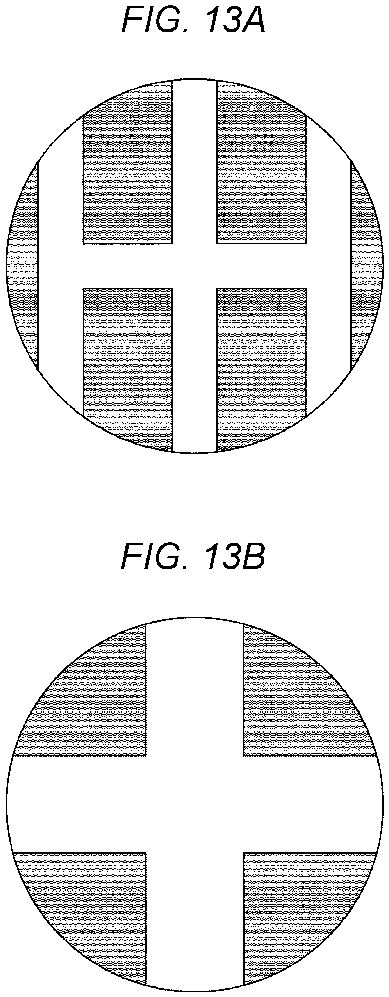

Fig. 13A is an explanatory diagram for explaining an example of movement restriction of the stick 10. Fig. 13A is a circle indicating a movable range of the stick 10, and the command value generation unit 135 may set operation restriction in a hatched region, for example.

That is, the user can tilt the stick 10 in a non-hatched region (that is, the white region). In contrast, when the user intends to tilt the stick 10 to the hatched region, the command value generation unit 135 may generate a command value that inhibits the action of tilting. In this case, when the user tries to tilt the stick 10 to the hatched region, the user can obtain such a force sensation that the stick 10 is pushed back to the non-hatched region side.

Fig. 13B is an explanatory diagram for explaining another example of movement restriction of the stick 10. For example, in the example illustrated in Fig. 13B, in a case where the stick 10 is used as a cross key, as illustrated in Fig. 13B, the command value generation unit 135 may limit the rotation range of the stick 10 to a range of the cross key such as the non-hatched region. With the movement restriction described above, the command value generation unit 135 can provide the user with assistance regarding movement of the stick 10.

Although the specific examples of the instantaneous presentation method and the continuous presentation method have been described above as the force sensation presentation methods, the force sensation presentation method according to the present disclosure is not limited to such examples. For example, the command value generation unit 135 may present a force sensation generated by vibration to the user.

### (Force sensation presentation by vibration)

In a case where the user wants to concentrate on action or the like, there are cases where the user sets a force sensation presentation request to be absent. In this case, the command value generation unit 135 may generate a command value obtained by converting a force sensation vector into vibration, sound, or the like.

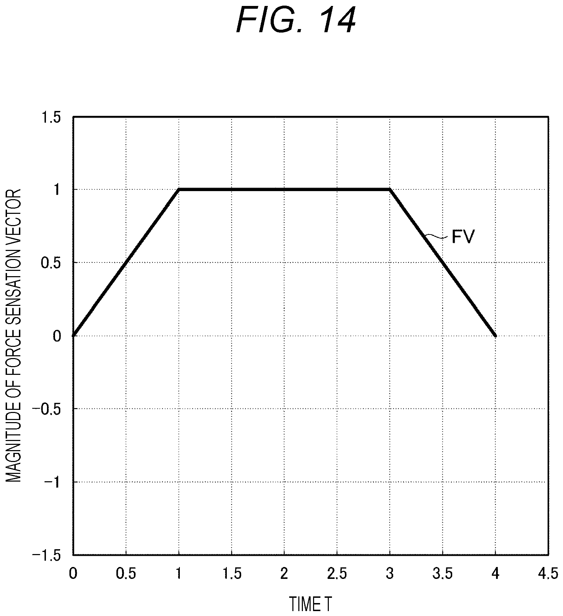

Fig. 14 is a diagram illustrating an example of a graph illustrating a transition of a force sensation vector with time. For example, the command value generation unit 135 may calculate a force sensation vector FV at each timing of time T = 0 to 4. Note that the unit of the time T here is arbitrary, but may be, for example, seconds. Furthermore, the magnitude of the force sensation vector illustrated in Fig. 14 may be, for example, the square root of the sum of squares of the magnitude in the vertical direction and the magnitude in the horizontal direction of the force sensation vector.

For example, the command value generation unit 135 may generate a command value including an amplitude corresponding to the calculated force sensation vector. In the following description, the amplitude is expressed as an envelope in some cases.

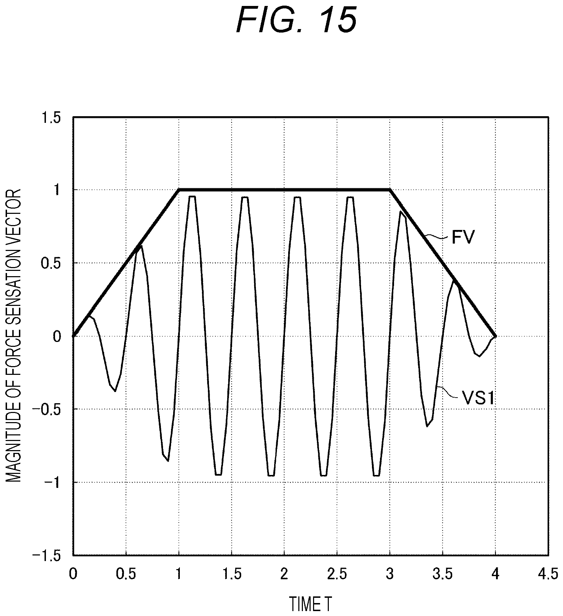

Fig. 15 is an explanatory diagram for explaining an example of the command value including amplitude information. For example, the command value generation unit 135 calculates an envelope on the basis of the force sensation vector FV. Then, the command value generation unit 135 may generate sinusoidal vibration VS1 based on the calculated envelope as a command value.

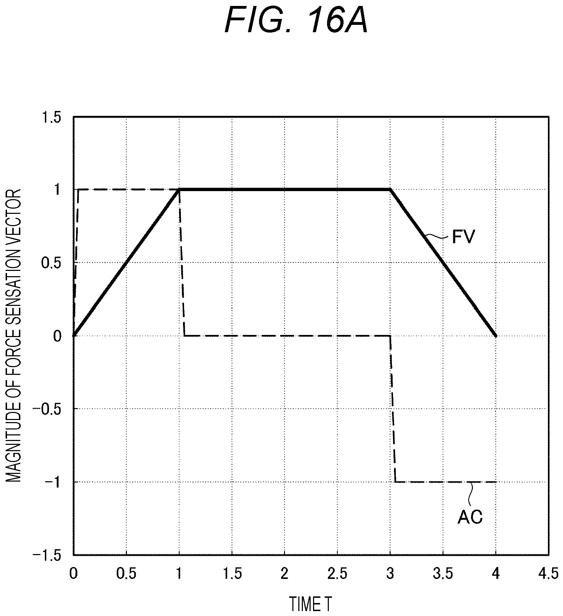

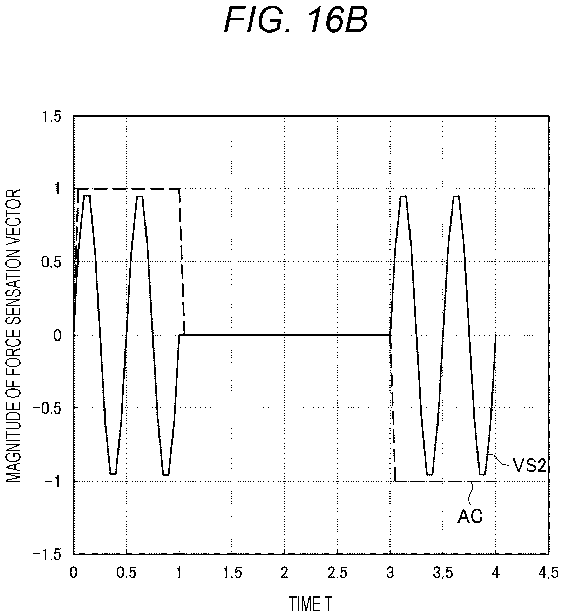

Figs. 16A and 16B are explanatory diagrams for explaining another example of the command value including amplitude information. The command value generation unit 135 may generate a command value including amplitude information corresponding to the change amount of the force sensation vector.

First, as illustrated in Fig. 16A, the command value generation unit 135 calculates a change amount AC of the force sensation vector FV with respect to time.

Then, the command value generation unit 135 calculates the envelope on the basis of the calculated change amount AC. Then, the command value generation unit 135 may generate sinusoidal vibration VS2 based on the calculated envelope as a command value.

As a result, the command value generation unit 135 can notify the user of a change in the object operated by the user, for example, in a case where the character C illustrated in Fig. 6 enters a swamp or leaves the swamp.

Note that although the example in which the command value generation unit 135 calculates the envelope on the basis of the force sensation vector has been described, the command value generation unit 135 may calculate the envelope and the frequency on the basis of the force sensation vector. As a result, the degree of freedom regarding vibration presentation increases, and the command value generation unit 135 can present various vibrations according to the situation and environment of the character C to the user.

Furthermore, the operation device 1 may further include a vibration motor as an example of the vibration presentation unit. Furthermore, the operation device 1 may further include a speaker for outputting a command value obtained by converting a force sensation vector into sound.

Alternatively, at least any one of the set of the stopper 40A and the rotating body 30A and the set of the stopper 40B and the rotating body 30B may repeatedly collide with each other to generate vibration. In this case, the stopper 40 is an example of the vibration presentation unit.

### <<3. Example of operation processing>>

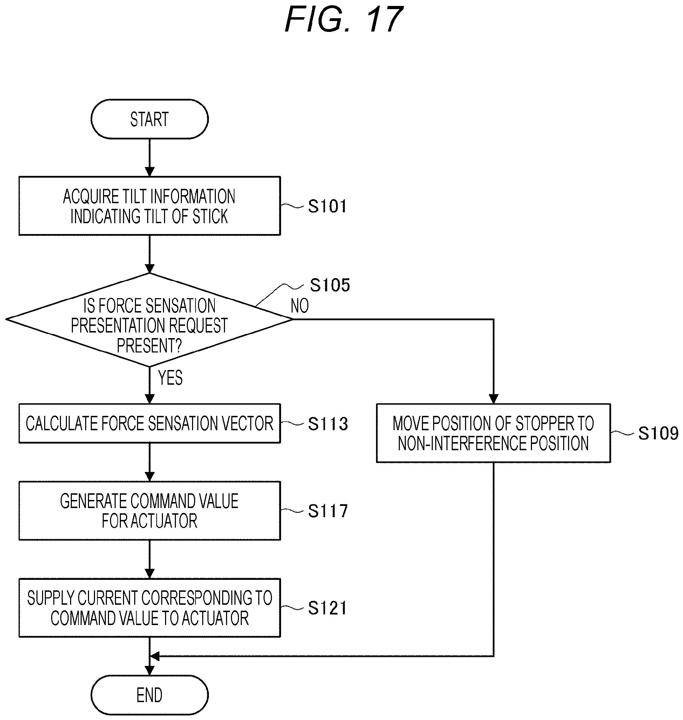

Fig. 17 is an explanatory diagram for explaining an example of operation processing of the control apparatus 100 according to the present disclosure. First, the communication unit 133 acquires tilt information indicating tilt of the stick 10 (S101).

Subsequently, the control unit 130 determines whether or not a force sensation presentation request is set to be present by the user (S105). In a case where the presentation request is set to be absent (S105/No), the processing proceeds to S109, and in a case where the presentation request is set to be present (S105/Yes), the processing proceeds to S113.

In a case where the presentation request is set to be absent (S105/No), the interface unit 131 moves the position of the stopper 40 to the non-interference position with the stick (S109), and the control apparatus 100 ends the processing.

In a case where the presentation request is set to be present (S105/Yes), the command value generation unit 135 calculates a force sensation vector on the basis of information regarding the target on the application (S113).

Subsequently, the command value generation unit 135 calculates a command value for the actuator 50 on the basis of the calculated force sensation vector (S117).

Then, the interface unit 131 supplies a current corresponding to the calculated command value to the actuator 50 to drive the actuator 50 (S121), and the control apparatus 100 ends the processing.

An example of the operation processing of the control apparatus 100 according to the present disclosure has been described above. However, the force sensation presentation method of the operation device 1 according to the present disclosure is not limited to the above-described example. Here, a specific example of the force sensation presentation method of the operation device 1 will be described.

### <<4. Specific example of force sensation presentation method>>

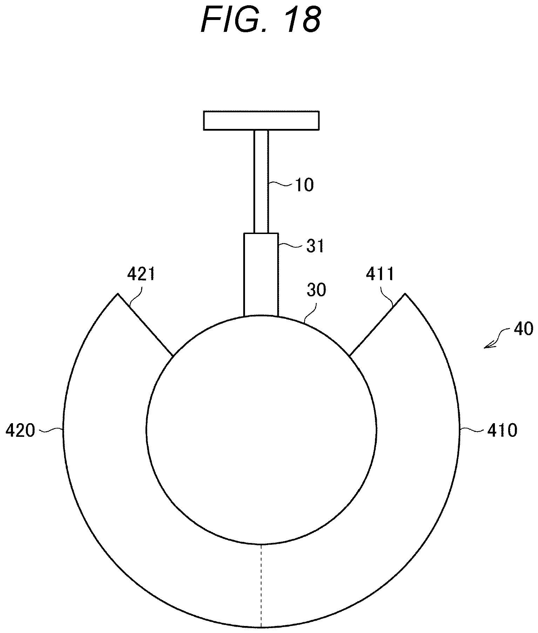

Fig. 18 is an abstract diagram obtained by abstracting a configuration regarding force sensation presentation of the operation device 1 according to the present disclosure. In the above-described example, an example in which the stopper 40 includes one component has been described. The stopper 40 can present positive and negative force sensations to the user by collision with the protruding structure 31 of the rotating body 30.

In the following description, the stopper 40 that generates a force in the positive direction is referred to as a positive stopper 410, and the stopper 40 that generates a force in the negative direction is referred to as a negative stopper 420. In the stopper 40 including one component, the right side is referred to as the positive stopper 410 and the left side is referred to as the negative stopper 420 with a broken line illustrated in Fig. 18 as a boundary.

For example, an end surface 411 of the positive stopper 410 comes into contact with (collides with) the protruding structure 31 of the rotating body 30, whereby a force sensation in the positive direction is presented to the user. Furthermore, an end surface 421 of the negative stopper 420 comes into contact with (collides with) the protruding structure 31 of the rotating body 30, whereby a force sensation in the negative direction is presented to the user.

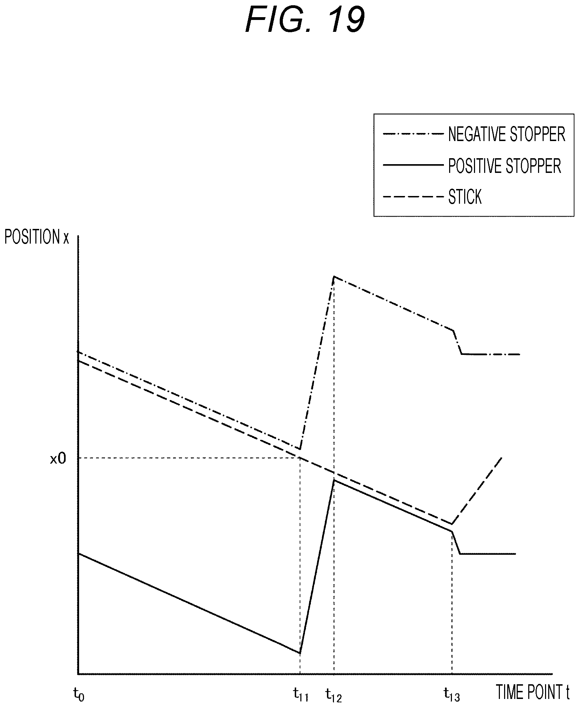

Fig. 19 is a graph illustrating a position change of each configuration in force sensation presentation of the operation device 1 according to the present disclosure. In Fig. 19, the position of the stick 10 is indicated by a broken line, the position of the positive stopper 410 is indicated by a solid line, and the position of the negative stopper 420 is indicated by a one-dot chain line. In Fig. 19, an example in which the actuator 50 controls the stopper 40 so as to present a force sensation toward an origin position x0 of the stick 10 will be described.

First, in the time from a time point t₀ to a time point t₁₁, the actuator 50 presents a force sensation in a negative direction to the stick 10 inclined in a positive direction by bringing the negative stopper 420 into contact with the stick 10. Then, in a case where the stick 10 is further tilted in the negative direction after reaching the origin position x0 of the stick 10 at the time point t₁₁, the actuator 50 presents a force sensation in the positive direction by causing the positive stopper 410 to come into contact with the stick 10. Then, in a case where the command value regarding the end of force sensation presentation is obtained (time point t₁₃ illustrated in Fig. 19), the actuator 50 moves the stopper 40 to a position not in contact with the stick 10.

Here, in a case where the stopper 40 includes one component, the positive stopper 410 and the negative stopper 420 move in conjunction with each other, and thus, when positive and negative of the force sensation to be presented to the user are switched, a blank time t₁₁ to t₁₂ of force sensation presentation corresponding to the width of the notch of the stopper 40 can be occur.
Occurrence of the blank time t₁₁ to t₁₂ may cause an event in which the required force sensation is not presented to the user.

Therefore, the stopper 40 may include two components obtained by separating the positive stopper 410 and the negative stopper 420 from each other. Then, the actuator 50 may rotate the positive stopper 410 and the negative stopper 420 in line-symmetric rotation directions by converting the rotation of the actuator 50 by a gear.

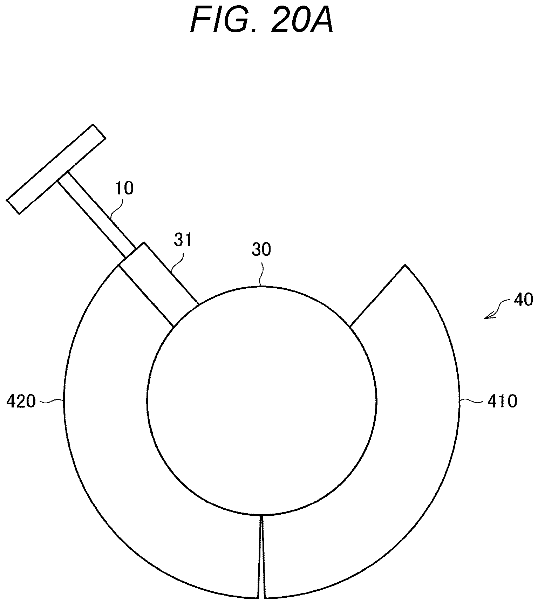

Figs. 20A to 20D are abstract diagrams obtained by abstracting a configuration regarding force sensation presentation of the operation device 1 including the stopper 40 including the two components. By converting the driving force of the actuator 50 by the gear, the positive stopper 410 and the negative stopper 420 have a sandwiching structure. Since the positive stopper 410 and the negative stopper 420 have the sandwiching structure, the stopper 40 can have a dynamically opening and closing notch as illustrated in Figs. 20A to 20D.

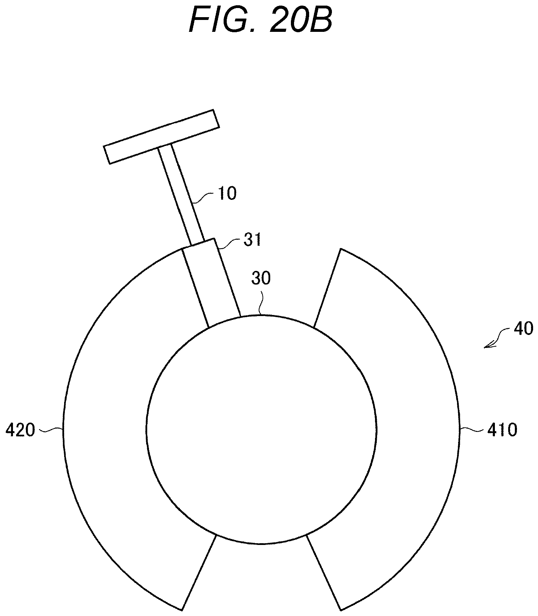

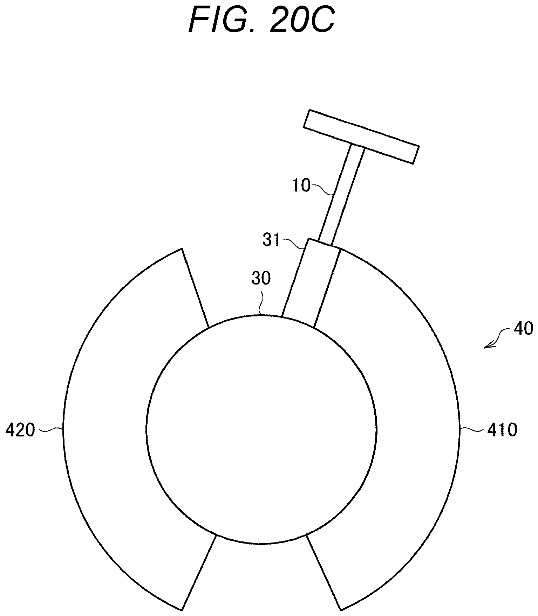

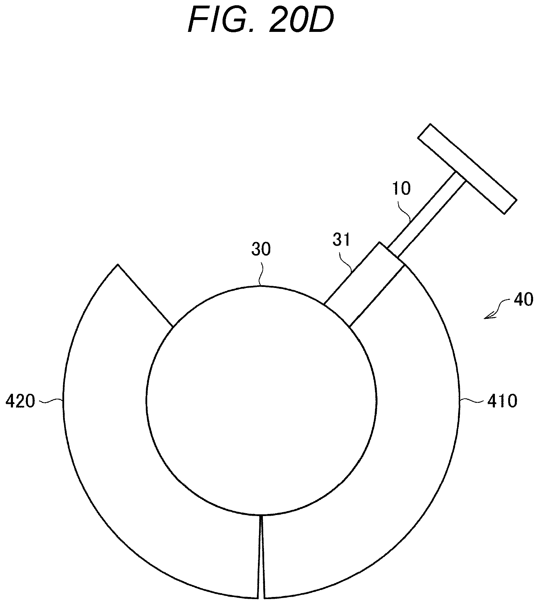

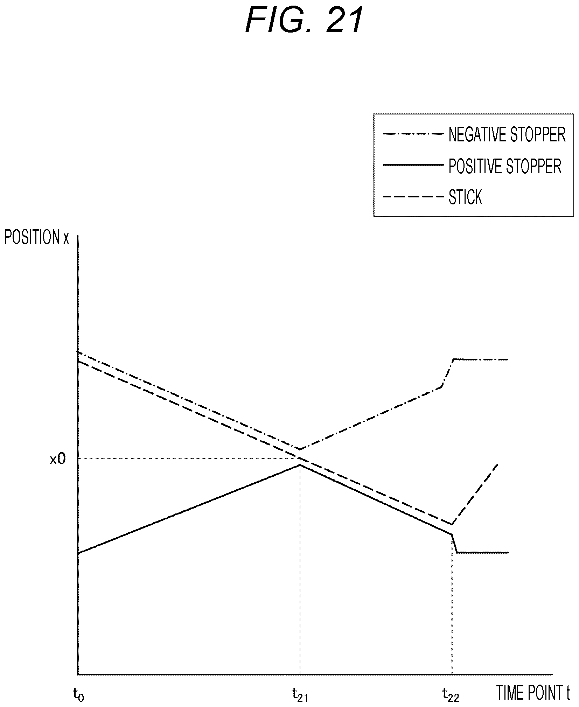

Fig. 21 is a graph illustrating a position change of each configuration in force sensation presentation of the operation device 1 including the stopper 40 including the two components. The graph illustrated in Fig. 21 is a graph illustrating the position of each configuration (the stick 10, the positive stopper 410, and the negative stopper 420) illustrated in Fig. 20.

For example, the positions of the configurations of the operation device 1 illustrated in Figs. 20A and 20B are indicated by the lines (solid line, broken line, one-dot chain line), respectively, in a time from a time point t₀ to a time point t₂₁ illustrated in Fig. 21. The positions of the configurations of the operation device 1 illustrated in Figs. 20C and 20D are indicated by the lines (solid line, broken line, one-dot chain line), respectively, in a time from the time point t₂₁ to a time point t₂₂ illustrated in Fig. 21.

For example, the positive stopper 410 and the negative stopper 420 constituting the stopper 40 rotate so as to sandwich the protruding structure 31 according to the driving force of the actuator 50. More specifically, the negative stopper 420 rotates to push back the position of the protruding structure 31 at the time point t₀ toward the origin position x0 according to the driving force of the actuator 50. At this time, the positive stopper 410 rotates in a direction opposite to the rotation direction of the negative stopper 420 (that is, the line-symmetric rotation direction) in conjunction with the rotation of the negative stopper 420.

As a result, as illustrated in Fig. 21, the width of the notch of the stopper 40 is dynamically narrowed, and the blank time (time from the time point t₁₁ to time t₁₂ illustrated in Fig. 19) of force sensation presentation can be reduced.

Furthermore, in the above-described example, an example in which the positive stopper 410 and the negative stopper 420 are driven by the driving force of one actuator 50 has been described. However, the operation device 1 according to the present disclosure may include a positive actuator that drives the positive stopper 410 and a negative actuator that drives the negative stopper 420.

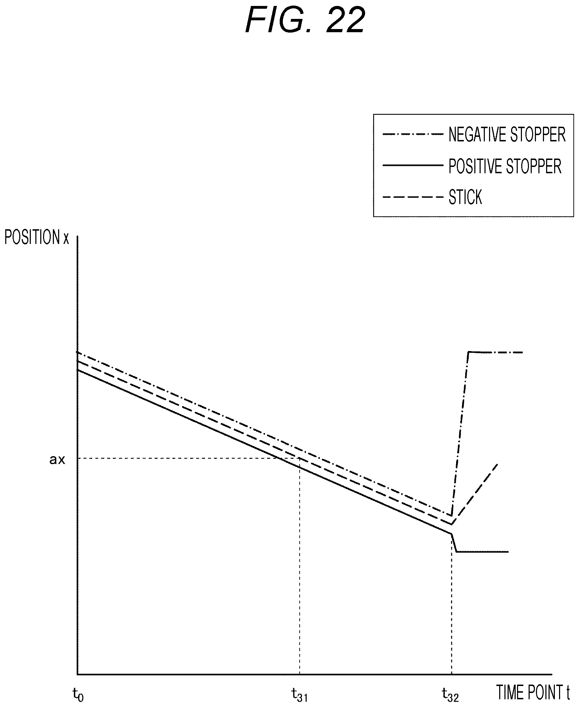

Fig. 22 is a graph illustrating a position change of each configuration in force sensation presentation of the operation device 1 including the positive actuator that drives the positive stopper 410 and the negative actuator that drives the negative stopper 420. Hereinafter, there are cases where the positive actuator and the negative actuator are collectively referred to as a plurality of actuators 50.

In the case of operating the plurality of actuators 50, as illustrated in Fig. 22, since the positive stopper 410 and the negative stopper 420 can be operated independently, it is possible to switch positive and negative of the force sensation to be presented to the user without delay (that is, without blank time) at an arbitrary stick position ax. Furthermore, by operating the plurality of actuators 50, the arbitrary stick position ax can be appropriately changed.

Furthermore, in a case where the command value regarding the end of force sensation presentation is obtained (time point t₃₂ illustrated in Fig. 22), the actuators 50 move the positive stopper 410 and the negative stopper 420 to non-interference positions with the stick 10. At this time, by operating the plurality of actuators 50, both the positive stopper 410 and the negative stopper 420 can be separated from the position of the stick 10.

Note that each of the number of components constituting the stopper 40 and the number of actuators 50 corresponding to the number of components is not limited to one or two. Each of the number of components constituting the stopper 40 and the number of actuators 50 corresponding to the number of components may be three or more.

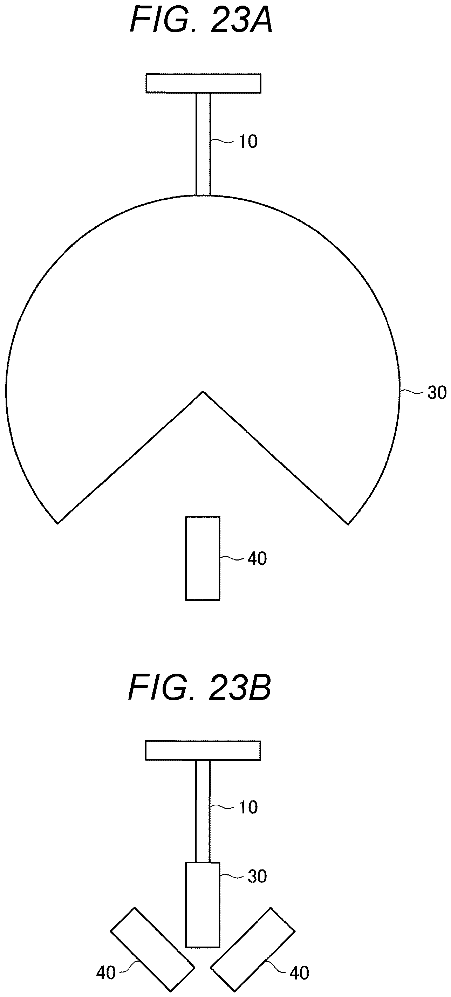

Furthermore, the shape of each configuration (for example, the rotating body 30 and the stopper 40) regarding force sensation presentation is not limited to the above-described examples. Hereinafter, modifications of each configuration related to force sensation presentation will be described with reference to Figs. 23A and 23B.

### (Modifications)

Figs. 23A and 23B are abstract diagrams for explaining modifications of the shape of each configuration (for example, the rotating body 30 and the stopper 40) related to force sensation presentation. For example, in the present specification, an example in which the rotating body 30 has the protruding structure 31 and the stopper 40 has a notch has been mainly described; however, as illustrated in Figs. 23A, the rotating body 30 may have a notch, and the stopper 40 may have a protruding structure. At this time, the stopper 40 may not have a notch.

Furthermore, each configuration regarding force sensation presentation only needs to have a structure capable of limiting the movable range of the stick 10, and for example, the shape of the stopper 40 may have a simpler structure without a notch as illustrated in Fig. 23B. For example, in a case where the stopper 40 includes two components, it is possible to reduce the weight of the operation device 1 by reducing the sizes of the two components of the stopper 40.

Furthermore, the relationship in size between the protruding structure 31 of the rotating body 30 and the notch of the stopper 40 is not limited to the above-described example. For example, the size of the protruding structure 31 is not particularly limited as long as the protruding structure 31 is accommodated in the notch of the stopper 40.

### <<5. Additional notes>>

The preferred embodiments of the present disclosure have been described in detail above with reference to the accompanying drawings, but the present disclosure is not limited to such examples. It is apparent that a person having ordinary knowledge in the technical field to which the present disclosure belongs can devise various change examples or modification examples within the scope of the technical idea described in the claims, and it will be naturally understood that such examples also belong to the technical scope of the present disclosure.

For example, in the present specification, an example in which the operation device 1 is used for an application for a game or the like has been mainly described, but the usage of the operation device 1 according to the present disclosure is not limited to such an example. For example, the operation device 1 according to the present disclosure may be used for usages such as a remote controller, operation of medical equipment, a controller for operating a mobile robot and a drone, and operation of an electric wheelchair.

Furthermore, an example in which the stick 10 according to the present disclosure is a rotary stick rotated by the rotating body 30 has been described, but the stick 10 may be a sliding stick.

Furthermore, an example in which the stick 10 according to the present disclosure is a two-dimensional stick that can be tilted in a two-dimensional direction has been described. However, the stick 10 may be a three-dimensional stick that can be operated by being vertically pushed or picked in addition to being tilted in a two-dimensional direction. Note that, in a case where the stick 10 is two-or more-dimensional, the command value generation unit 135 according to the present disclosure can present a force sensation in an arbitrary direction included in each dimension to the user by decomposing the force sensation vector into components in the respective dimension directions and calculating each component.

Furthermore, although an arrangement example of each configuration of the operation device 1 has been described in Fig. 2, the arrangement of each configuration of the operation device 1 is not limited to such an example. Each configuration such as the actuator 50 or the like may be arranged at an arbitrary position depending on the type and arrangement of the gear.

Furthermore, an example has been described in which upon presentation of a force sensation, the actuator 50A rotates the stopper 40A to bring the end surface of the notch of the rotating body 30A into contact with the abutting portion of the rotating body 30A, and the actuator 50B rotates the stopper 40B to bring the end surface of the notch of the stopper 40B into contact with the abutting portion of the rotating body 30B.

As described above, the actuator 50A and the actuator 50B are independently controlled when the rotating body 30A and the rotating body 30B are rotated, but the structure for suppressing tilting operation of the stick 10 is not limited to such an example. For example, the stopper 40A may have a mechanism that applies brakes to the rotating body 30 by friction instead of contact by the end surface of the notch.

For example, a mechanism that simultaneously brakes both the rotation axis of the rotating body 30A and the rotation axis of the rotating body 30B may be adopted. As a result, two-axis rotation can be suppressed by one actuator 50.

Furthermore, there is a possibility that the stick 10 is tilted by the user in a direction not intended by the user due to the magnitude or rapid change of the force sensation vector. Therefore, the command value generation unit 135 may perform correction related to erroneous input prevention in accordance with such a situation. Then, the command value generation unit 135 may generate a command value for which correction regarding erroneous input prevention has been executed.

For example, the command value generation unit 135 may provide a time of several seconds in which operation with the stick 10 is disabled after instantaneously presenting a force sensation. Furthermore, in a case where the stick 10 is tilted with respect to the direction in which a force sensation is presented, the command value generation unit 135 may not receive operation input by the stick 10 until the stick 10 returns to the vicinity of the position of the stick 10 before the stopper 40 and the abutting portion of the rotating body 30 collides with each other.

Furthermore, for example, in a case where a sense of resistance when walking is presented to the user, when the stick 10 is tilted, a force of pushing back in the origin point direction can be presented. At this time, there is a possibility that the character will walk in the opposite direction by being pushed back too much more than the force of the user's finger. Moreover, when being pushed back too much, a force sensation of pushing back in the opposite direction is presented again, and chattering can occur. Therefore, after presenting a force sensation, the command value generation unit 135 may perform control such that presentation of a force sensation is turned OFF at a predetermined angle from the angle reference of the stick 10. Specifically, after presenting a force sensation, the command value generation unit 135 may perform control such that presentation of a force sensation is turned OFF at +5° from the origin. As a result, it is possible to prevent the stick 10 from bouncing back to an unintended angle. Note that the angle reference is not limited to the origin.

Furthermore, each step in the processing of the control apparatus 100 in the present specification is not necessarily processed in time series in the order described in the flowchart. For example, each step in the processing of the information processing system may be processed in an order different from the order described as the flowchart or in parallel.

Furthermore, it is also possible to create a computer program for causing hardware built in the control apparatus 100, such as a CPU, a ROM, and a RAM, to exhibit a function equivalent to each configuration of the above-mentioned control apparatus 100. Furthermore, a non-transitory storage medium storing the computer program is also provided.

Furthermore, the effects described in the present specification are merely exemplary or illustrative, and not restrictive. That is, the technology according to the present disclosure can exhibit other effects apparent to those skilled in the art from the description of the present specification, in addition to the effects described above or instead of the effects described above.

Note that the following configurations also fall within the technological scope of the present disclosure.
(1) An operation device including:
   an operation unit that is moved by an operation of a user;
   a first movable unit that enables the operation unit to move within a predetermined range;
   a first drive unit; and
   a first driven unit that includes at least one component and is capable of moving an abutting portion of the first movable unit according to a driving force of the first drive unit.
(2) The operation device according to (1) further including:
   a second movable unit that enables the operation unit to move on a second axis different from a first axis on which the operation unit is capable of being moved by the first movable unit;
   a second drive unit; and
   a second driven unit that includes at least one component and is capable of moving an abutting portion of the second movable unit according to a driving force of the second drive unit.
(3) The operation device according to (2), in which
   the first movable unit includes
   a first rotating body that enables the operation unit to be tilted with respect to the first axis by an operation of the user, and
   the second movable unit includes
   a second rotating body that enables the operation unit to be tilted with respect to the second axis by an operation of the user.
(4) The operation device according to (3), in which
   the at least one component included in each of the first driven unit and the second driven unit has an end surface, and
   each of the first rotating body and the second rotating body is
   movable by contact between the end surface and the abutting portion.
(5) The operation device according to (4), in which
   each of the first driven unit and the second driven unit has a notch, and
   each of the first rotating body and the second rotating body is
   movable by contact between an end surface of the notch and the abutting portion.
(6) The operation device according to (4) or (5), in which
   the first drive unit and the second drive unit
   rotate the first driven unit or the second driven unit on the basis of presence or absence of a force sensation presentation request set in advance.
(7) The operation device according to (6), in which
   the first drive unit and the second drive unit
   rotate the first driven unit or the second driven unit in a case where the force sensation presentation request is set to be present.
(8) The operation device according to (7), in which
   in a case where the force sensation presentation request is set to be present, the first drive unit and the second drive unit apply a load in a rotation direction of the first rotating body according to the driving force by contact between the first driven unit and the abutting portion of the first rotating body, and apply a load in a rotation direction of the second rotating body according to the driving force by contact between the second driven unit and the abutting portion of the second rotating body.
(9) The operation device according to (7) or (8), in which
   in a case where the force sensation presentation request is set to be absent, the first drive unit and the second drive unit move the first driven unit and the second driven unit to positions not in contact with the operation unit when the operation unit is tilted within the predetermined rotation range.
(10) The operation device according to any one of (3) to (9), in which
   the driving force of the first drive unit and the second drive unit is
   based on a force sensation value based on a characteristic of an operation object operated by tilting the operation unit.
(11) The operation device according to (10), in which
   the force sensation value is
   calculated on the basis of a characteristic of an interference object that interferes with the operation object.
(12) The operation device according to (10) or (11), in which
   the force sensation value is
   calculated on the basis of an angle at which the operation unit is tilted.
(13) The operation device according to any one of (10) to (12), in which
   the force sensation value is
   calculated on the basis of an elapsed time from when the driving force is presented.
(14) The operation device according to any one of (10) to (13), in which
   the driving force is
   based on a command value for driving the first drive unit or the second drive unit, the command value being generated on the basis of the force sensation value.
(15) The operation device according to (14), in which
   in the command value,
   upon presentation of an instantaneous force sensation, intensity of feedback varies depending on a number of times that the instantaneous force sensation is presented.
(16) The operation device according to (14) or (15), in which
   the first drive unit
   separates the end surface of the first driven unit from the abutting portion of the first rotating body by a predetermined offset distance and then causes the end surface of the first driven unit to collide with the abutting portion of the first rotating body in a case where an instantaneous force sensation presentation mode is set, and
   the second drive unit
   separates the end surface of the second driven unit from the abutting portion of the second rotating body by a predetermined offset distance and then causes the end surface of the second driven unit to collide with the abutting portion of the second rotating body in a case where the instantaneous force sensation presentation mode is set.
(17) The operation device according to any one of (14) to (16), in which
   the command value is
   generated on the basis of the force sensation value that is continuously calculated upon presentation of a continuous force sensation.
(18) The operation device according to any one of (14) to (17), in which
   in a case where a continuous force sensation presentation mode is set, the first drive unit rotates the first rotating body at a first speed in a case where a distance between the end surface of the first driven unit and the abutting portion of the first rotating body is equal to or more than a first distance, and rotates the first rotating body at a second speed in a case where the distance between the end surface of the first driven unit and the abutting portion of the first rotating body is less than the first distance, and
   in a case where the continuous force sensation presentation mode is set, the second drive unit rotates the second rotating body at a third speed in a case where a distance between the end surface of the second driven unit and the abutting portion of the second rotating body is equal to or more than a second distance, and rotates the second rotating body at a fourth speed in a case where the distance between the end surface of the second driven unit and the abutting portion of the second rotating body is less than the second distance.
(19) The operation device according to any one of (14) to (18) further including
   a vibration presentation unit that vibrates on the basis of the command value.
(20) The operation device according to (19) further including
   a sensor that detects the driving force generated by contact between the first driven unit and the first rotating body or between the second driven unit and the second rotating body,
   in which the first drive unit and the second drive unit
   perform driving on the basis of the driving force held in association with the command value.

### REFERENCE SIGNS LIST

- 1: Operation device
- 10: Stick
- 15: Limiting ring
- 20: Stick cap
- 30: Rotating body
- 40: Stopper
- 50: Actuator
- 55, 60: Angle sensor
- 70: Origin return unit
- 100: Control apparatus
- 110: Storage unit
- 120: Power supply unit
- 130: Control unit
- 131: Interface unit
- 132: Angle information receiving unit
- 133: Communication unit
- 134: Setting receiving unit
- 135: Command value generation unit

## Claims

1. An operation device comprising:
an operation unit that is moved by an operation of a user;
a first movable unit that enables the operation unit to move within a predetermined range;
a first drive unit; and
a first driven unit that includes at least one component and is capable of moving an abutting portion of the first movable unit according to a driving force of the first drive unit.

2. The operation device according to claim 1 further comprising:
a second movable unit that enables the operation unit to move on a second axis different from a first axis on which the operation unit is capable of being moved by the first movable unit;
a second drive unit; and
a second driven unit that includes at least one component and is capable of moving an abutting portion of the second movable unit according to a driving force of the second drive unit.

3. The operation device according to claim 2, wherein
the first movable unit includes
a first rotating body that enables the operation unit to be tilted with respect to the first axis by an operation of the user, and
the second movable unit includes
a second rotating body that enables the operation unit to be tilted with respect to the second axis by an operation of the user.

4. The operation device according to claim 3, wherein
the at least one component included in each of the first driven unit and the second driven unit has an end surface, and
each of the first rotating body and the second rotating body is
movable by contact between the end surface and the abutting portion.

5. The operation device according to claim 4, wherein
each of the first driven unit and the second driven unit has a notch, and
each of the first rotating body and the second rotating body is
movable by contact between an end surface of the notch and the abutting portion.

6. The operation device according to claim 4, wherein
the first drive unit and the second drive unit
rotate the first driven unit or the second driven unit on a basis of presence or absence of a force sensation presentation request set in advance.

7. The operation device according to claim 6, wherein
the first drive unit and the second drive unit
rotate the first driven unit or the second driven unit in a case where the force sensation presentation request is set to be present.

8. The operation device according to claim 7, wherein
in a case where the force sensation presentation request is set to be present, the first drive unit and the second drive unit apply a load in a rotation direction of the first rotating body according to the driving force by contact between the first driven unit and the abutting portion of the first rotating body, and apply a load in a rotation direction of the second rotating body according to the driving force by contact between the second driven unit and the abutting portion of the second rotating body.

9. The operation device according to claim 7, wherein
in a case where the force sensation presentation request is set to be absent, the first drive unit and the second drive unit move the first driven unit and the second driven unit to positions not in contact with the operation unit when the operation unit is tilted within the predetermined rotation range.

10. The operation device according to claim 3, wherein
a driving force of the first drive unit and the second drive unit is
based on a force sensation value based on a characteristic of an operation object operated by tilting the operation unit.

11. The operation device according to claim 10, wherein
the force sensation value is
calculated on a basis of a characteristic of an interference object that interferes with the operation object.

12. The operation device according to claim 10, wherein
the force sensation value is
calculated on a basis of an angle at which the operation unit is tilted.

13. The operation device according to claim 10, wherein
the force sensation value is
calculated on a basis of an elapsed time from when the driving force is presented.

14. The operation device according to claim 10, wherein
the driving force is
based on a command value for driving the first drive unit or the second drive unit, the command value being generated on a basis of the force sensation value.

15. The operation device according to claim 14, wherein
in the command value,
upon presentation of an instantaneous force sensation, intensity of feedback varies depending on a number of times that the instantaneous force sensation is presented.

16. The operation device according to claim 14, wherein
the first drive unit
separates the end surface of the first driven unit from the abutting portion of the first rotating body by a predetermined offset distance and then causes the end surface of the first driven unit to collide with the abutting portion of the first rotating body in a case where an instantaneous force sensation presentation mode is set, and
the second drive unit
separates the end surface of the second driven unit from the abutting portion of the second rotating body by a predetermined offset distance and then causes the end surface of the second driven unit to collide with the abutting portion of the second rotating body in a case where the instantaneous force sensation presentation mode is set.

17. The operation device according to claim 14, wherein
the command value is
generated on a basis of the force sensation value that is continuously calculated upon presentation of a continuous force sensation.

18. The operation device according to claim 14, wherein
in a case where a continuous force sensation presentation mode is set, the first drive unit rotates the first rotating body at a first speed in a case where a distance between the end surface of the first driven unit and the abutting portion of the first rotating body is equal to or more than a first distance, and rotates the first rotating body at a second speed in a case where the distance between the end surface of the first driven unit and the abutting portion of the first rotating body is less than the first distance, and
in a case where the continuous force sensation presentation mode is set, the second drive unit rotates the second rotating body at a third speed in a case where a distance between the end surface of the second driven unit and the abutting portion of the second rotating body is equal to or more than a second distance, and rotates the second rotating body at a fourth speed in a case where the distance between the end surface of the second driven unit and the abutting portion of the second rotating body is less than the second distance.

19. The operation device according to claim 14 further comprising
a vibration presentation unit that vibrates on a basis of the command value.

20. The operation device according to claim 19 further comprising
a sensor that detects the driving force generated by contact between the first driven unit and the first rotating body or between the second driven unit and the second rotating body,
wherein the first drive unit and the second drive unit
perform driving on a basis of the driving force held in association with the command value.
